# EUROPEAN PATENT APPLICATION

(11) **EP 2 436 752 A2**
(43) Date of publication of application: **04.04.2012**
(21) Application number: 11180540.4
(22) Date of filing: 08.09.2011
(51) Int. Cl.: C10J 3/00, C10J 3/40, C10J 3/20, C10J 3/30, C10J 3/22

(54) **Biomass gasifier and gasification plant**

(30) Priority: 17.09.2010 GB 1015544
(71) Applicant: O-Gen UK Limited, Stone Staffordshire ST15 8XU (GB)
(72) Inventor: Mitchell, James Desmond, Didcot Oxfordshire OX11 0BU (GB); Degg, Mark, Stoke-on-Trent Staffordshire ST11 9RD (GB); Pike, David, Stone Staffordshire ST15 8XU (GB)
(74) Representative: Mansfield, Peter Turquand

(57) **Abstract**

A gasifier (7) comprises a generally upright cylindrical chamber (25) at least a lower part (25b) of which is defined by a body of refractory material (35); an inlet chamber (21) communicating with the top of the chamber (25), the inlet chamber being provided with two spaced-apart valve means (22, 23) which may be closed to inhibit ingress of air and may be opened successively to allow input of biomass. The refractory body (35) defines a throat (56) communicating with the bottom of the chamber (25), the throat comprising a tapered portion (56a) tapering at an angle of at least 50° to the horizontal to a cylindrical portion (56b) of diameter less than that of the chamber (25), and a lower portion (56c) increasing in diameter; the refractory body (35) also defines air inlet ducts (58) communicating with the chamber (25) above the throat (56). A grate (44) below the refractory body (35) comprises movable elements to assist passage of charcoal. Below the grate (44) is an outlet duct (54) for extraction of gas from the gasifier (7). The gasifier suppresses tar formation during gasification, and is suitable for treating waste wood.

## Description

This invention relates to a gasifier for processing biomass by means of a gasification process, so as to produce a fuel gas, and to a plant including such a gasifier.

Gasification (which may also be referred to as pyrolysis) is a known process for converting biomass to a gas stream, and the biomass might for example be straw, bagasse, or other agricultural wastes, waste paper, or wood. Such a process may be applied to biomass grown specifically for the purpose, or to waste materials. In particular waste wood would be a suitable material for such a process. The gasification process involves heating the biomass to an elevated temperature, possibly in the presence of a restricted quantity of air, to break down organic materials and to generate carbon monoxide and hydrogen. This gas mixture may be used to generate power in an engine. Other products of the process are charcoal, particulate carbon, and tars. A gasification plant is described in GB 2 455 869 (O-Gen UK Ltd) in which wood is shredded and then subjected to downdraft gasification, and the resulting gases are purified before being used as a fuel. It has been found that previous designs of gasifier that are suitable for virgin timber are not as satisfactory for waste timber: when shredded, waste timber tends to knit together and to form bridges within the gasifier, and in addition waste timber typically includes tramp matter such as metal items and stones, which can cause blockage. Both these problems lead to nonuniform airflow and localised temperature variations, which increase tar formation.

According to the present invention there is provided a gasifier comprising means to define a generally upright cylindrical chamber at least a lower part of which is defined by a body of refractory material; an inlet chamber communicating with the top of the cylindrical chamber, the inlet chamber being provided with two spaced-apart valve means which may be closed to inhibit ingress of air and may be opened successively to allow input of biomass; the refractory body defining a throat communicating with the bottom of the cylindrical chamber, the throat comprising a tapered portion tapering at an angle of at least 50° to the horizontal to a cylindrical portion of diameter less than that of the cylindrical chamber, and a lower portion increasing in diameter below the cylindrical portion; the refractory body also defining a multiplicity of air inlet ducts communicating with the cylindrical chamber above the throat; a grate below the refractory body, the grate comprising movable elements; and an outlet duct for extraction of gas from the gasifier below the refractory body.

Preferably a hopper is defined at the bottom of the gasifier, to collect charcoal produced during gasification, the hopper being provided with an outlet chamber defined between two successive gas-tight flap valves. The valves may be operated so that charcoal is allowed into the outlet chamber, and held there to allow cooling, before being discharged. The outlet chamber is gas tight, by virtue of the flap valves; and during use is preferably purged with an inert gas such as nitrogen to prevent combustion.

Preferably the air inlet ducts communicate with the cylindrical chamber at locations around its circumference at separations of less than 130 mm, preferably less than 110 mm (centre to centre) to maximise the uniformity of the inlet airflow, so suppressing tar formation. Preferably the air inlet ducts are of diameter less than 20 mm, preferably less than 16 mm.

In a preferred embodiment the cylindrical chamber is of a diameter in the range between 450 mm and 650 mm, more preferably between 500 mm and 550 mm, for example 520 mm; and the cylindrical portion of the throat may have a diameter between 280 mm and 400 mm, more preferably between 300 mm and 350 mm, for example 330 mm. The cylindrical portion of the throat may be between 60 and 65% that of the cylindrical chamber, for example between 61 and 64%. It has been found that having a taper angle in the throat of at least 50 "significantly reduces the risk of waste timber forming bridges within the throat.

In one embodiment the height of the lower part of the cylindrical chamber, defined by the body of refractory material, is approximately equal to the diameter of the cylindrical chamber, but alternatively it might be up to twice the length of the cylindrical chamber, so that the height might be between 80% and 200% of the diameter; or alternatively the entire height of the cylindrical chamber may be defined by the body of refractory material. The volume below the throat of the chamber defined by the body of refractory material is preferably sufficient that the residence time of synthesis gas within the charcoal above the grate is at least 0.1 s.

The grate may comprise a multiplicity of grate bars arranged side-by-side in substantially a common plane, alternate grate bars being movable lengthwise so as to move relative to adjacent grate bars, wherein each grate bar defines a multiplicity of recesses along both sides of the bar, recesses on one side of the bar being arranged alternately with recesses on the opposite side of the bar along the length of the bar. Preferably alternate grate bars are connected to a linking mechanism whereby the alternate grate bars can be moved lengthwise simultaneously. The lengthwise movement of the bars by a distance equal to the length of a recess has the effect that a recess on one bar moves into a position where it is next to a recess on the adjacent bar, so effectively doubling the width of the gap between these adjacent portions of the bars. Hence movement of the alternate grate bars in the grate changes the gap widths, so that charcoal and any other materials tend to fall through, but the area available for gas flow is not altered. An access port may be provided so that any contaminant materials that remain on the upper surface of the grate can be removed, if necessary.

Preferably the upper surfaces of all the grate bars are provided with upwardly-projecting teeth, for example with an asymmetrical sawtooth shape. As the bars are moved, such teeth ensure that the solid material resting on the bars is disturbed. And preferably the sides of the grate bars taper downwardly, at least at the positions of the recesses, so that the width of the recesses increases in the downward direction. A grate with these features is described in GB 1002069.1.

The gas outlet duct from the gasifier may comprise an outlet pipe with an open end facing downwardly, below the grate. The open end is preferably also surrounded by a baffle or flange so that small particles of charcoal falling through the grate are not carried into the outflowing gas stream.

The present invention, in a second aspect, also provides a gasification plant comprising a gasifier as specified above, means to feed biomass into the inlet chamber, means to cause flow of gas downwardly through the throat of the gasifier and out of the gas outlet duct, and gas purification means for removing particulate material and tar from the out flowing gas stream. As described in GB 2 455 869 the particulate material may be removed by passing the gas stream through a filter at a high temperature (above 500°C), and the tar may then be removed by scrubbing by passing the gas stream through a fluidic vortex gas/liquid contactor without moving parts, the gas stream following a vortex path through a cylindrical chamber between a tangential inlet and an axial outlet, and a scrubbing liquid being sprayed outwardly through the gas stream.

The gasifier of the invention is a downdraft gasifier, because the gas inlet ducts (air inlet) are above the throat, while the outlet duct is below the grate. It is effective in reducing the level of tar in the outflowing gas stream, partly by inhibiting the formation of tar, and also by cracking any tar that forms as the gas stream passes downwardly through the hot bed of charcoal above the throat. For example, when treating waste wood, a gasifier of the present invention has been found to attain tar levels before scrubbing of < 10 mg/m³, and levels after scrubbing of less than 2 mg/m³; previous downdraft gasifiers have given tar levels after scrubbing of about 0.5 g/m³, while updraft gasifiers typically give tar levels after scrubbing of between 1 and 2 g/m³.

The invention will now be further and more particularly described, by way of example only, and with reference to the accompanying drawings in which:
Figure 1 shows a schematic diagram of a waste wood gasification plant of the invention;
Figure 2 shows a side view of the gasifier in the plant of figure 1, partly in section;
Figure 3 shows a plan view of the grate of the gasifier of figure 2, corresponding to a view of the grate on the line III-III; and
Figure 4 shows a side view of a modification to the gasifier of figure 2.

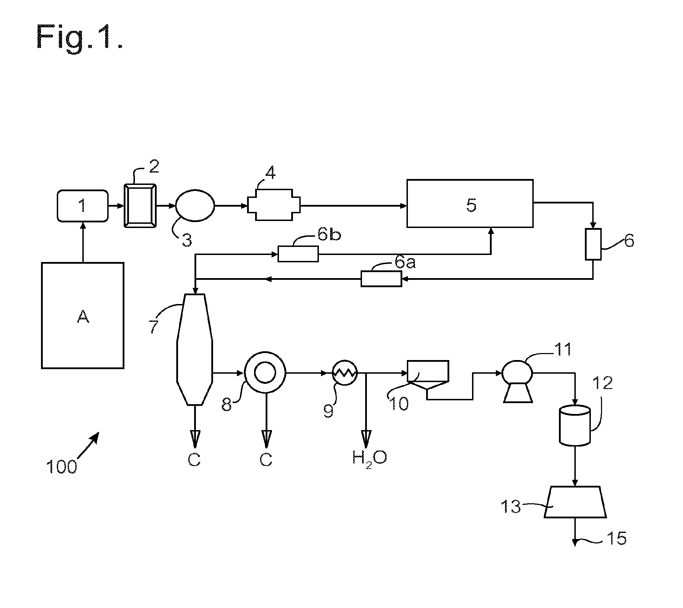

Referring to figure 1, a gasification plant 100 includes a reception building A where the organic feedstock (waste wood in this example) is offloaded from delivery vehicles. It is then loaded into a shredder 1. In this example the shredder 1 contains four shafts carrying cutting disks. The shafts are rotated at a low speed, approximately 25 rpm, driven by electric motors through gearboxes, producing a substantially consistent product size with minimal production of dust. The shredded waste wood passes through a sizing screen (not shown) within the shredder 1 before falling on to a discharge conveyor which transfers it to an overhead magnet 2 arranged to extract any ferromagnetic material. The shredded wood is then passed over an eddy current separator 3 to remove any non-ferrous metals, and then over a vibrating finger screen or a rotary screen 4 to separate fines. The cleaned and sized shredded wood then travels along an inclined conveyor to a storage container 5 with a mechanism for feeding out the feedstock at a substantially constant rate.

The shredded wood from the storage container 5 is passed over a further magnetic separator 6 to ensure removal of any ferromagnetic materials, and then over an in-feed weighing device 6a, and so to one or more gasifiers 7 (only one is shown). By way of example the plant may include several such gasifiers 7, for example twelve or eighteen. These operate continuously, but are fed by a batch process through individual lock-off hopper systems. Each can process 270 kg of prepared organic feedstock per hour, but processes in batches of about 17 kg, and treating fifteen batches per hour. Any excess organic feedstock is returned to the storage container 5 via another in-line weighing device 6b. Within each gasifier 7 there is a low oxygen atmosphere (typically about 2%) at a slightly negative pressure (i.e. less than atmospheric pressure), the gas flowing downwardly through a bed of hot feedstock and charcoal reaching a temperature of for example above 800°C. The combination of temperature and residence time in the gasifier 7 not only brings about gasification of the waste wood, but also cracks most of the tar that is produced during the gasification, because the gases (and tar) pass down through the hottest region of the bed. The gases produced by gasification are sucked out from the base of the unit 7 by an induced draft fan 11.

The hot gas stream consisting principally of hydrogen and carbon monoxide is then passed through a gas filter 8 consisting of several hollow ceramic filter candles hanging from a top plate, the gas stream flowing upwardly through the filter candles (so the candles can be cleaned by back pulsing clean gas down the candles). These filter candles remove particulate matter down to about 5 µm. The hot clean gas, typically at between about 450 and 500°C, is then passed through a heat exchanger 9 to cool the gas down to less than 50°C (this may be achieved using two heat exchangers 9 in series), for example down to 25°C. This leads to condensation of moisture in the gas flow, and the resulting condensate is discharged (shown as H2O). The cool gas stream is then passed through a fluidic vortex scrubber 10 which consists of a cylindrical vortex chamber into which the gas flows through a tangential inlet port, and emerges from an axial outlet port, such that there is a vigorous vortex flow within the chamber; and a scrubbing liquid is sprayed through the gas in the vortex. The scrubbed gas stream then passes through the induced draft fan 11 into a buffer storage vessel 12, the induced draft fan 11 ensuring that the pressure in the storage vessel 12 is above atmospheric.

The clean dry gas in the buffer storage vessel 10 is used to provide fuel to a gas-fuelled internal combustion engine 13, and the exhaust gas from the engine 13, after treatment, is discharged through an exhaust stack 15. The plant 100 may have several such engines 13, for example six engines, but sharing the exhaust stack 15. Typically each gasifier 7 is associated with its own filter 8, heat exchanger 9, scrubber 10 and fan 11. Typically two gasifiers 7 provide gas to one buffer storage vessel 10 which supplies gas to a single engine 13, as combining the outlets from two gasifiers 7 provides a more consistent composition of the gas mixture supplied to each engine 13. Each engine 13 may for example generate electricity. Alternatively gas from a number of gasifiers 7 may instead be connected to a boiler, to provide steam to drive a steam turbine and generator.

Each gasifier 7 also produces charcoal, or carbon char, depending on the nature of the feedstock, and this is removed from the base of the gasifier (shown as C). The filter 8 captures particulate carbon char, and this is released from the filter when it is back-pulsed; this separated carbon char is also shown as C. These supplies of carbon (charcoal or char) may be used to form granules or briquettes, as a by-product.

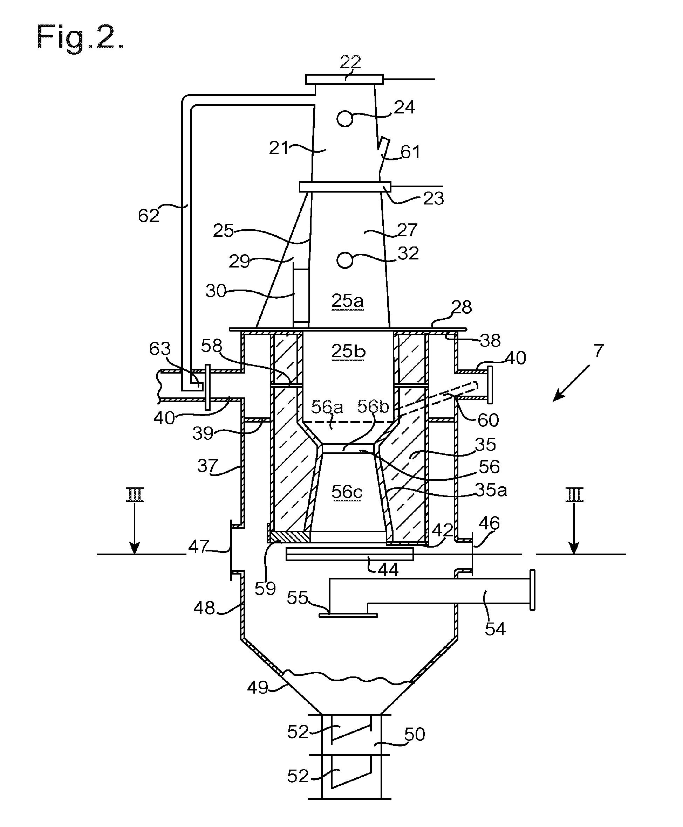

Referring now to figure 2 the gasifier 7 is shown in side view, the central part being shown in longitudinal section. The shredded wood is fed into an inlet chamber 21 which is generally cylindrical but becomes gradually wider in the downward direction, and is defined between an upper slide valve 22 and a lower slide valve 23. It is also provided with an access port 24 for checking the level of the shredded wood using microwaves. Below the lower slide valve 23 is a generally cylindrical gasification chamber 25. With the lower slide valve 23 closed and the upper slide valve 22 open a batch of shredded wood can be introduced into the inlet chamber 21; the upper slide valve 22 is then closed; when the lower slide valve 23 is opened the shredded wood falls down into the gasification chamber 25.

The inlet chamber 21 is also provided with a small air inlet port 61 just above the lower slide valve 23, open to the surroundings, and a gas outlet duct 62 just below the upper slide valve 22.

The gasification chamber 25 is in two parts. An upper part 25a is defined by a steel tube 27 which is provided, at its lower end, with a large flange 28 linked to the tube 27 by three equally spaced triangular ribs 29 (only one of which is shown, for clarity). The tube 27 is also provided with an access hatch 30 and an access port 32 for checking the level of the shredded wood using microwaves. The tube 27 is generally cylindrical but becomes gradually wider in the downward direction.

A lower part 25b is defined by a refractory lining 35, described in more detail below. The innermost portion 35a of the refractory lining 35 is formed of refractory material reinforced with metal fibres so that it is abrasion resistant; the remainder of the refractory lining 35 is of refractory material without such reinforcement. The refractory lining 35 is enclosed within a double-walled steel chamber 37 which is closed at its top by a flange 38 of the same dimensions as the large flange 28; the flanges 28 and 38 are connected together. The inner wall of the steel chamber 37 is fixed to the outer wall not only by the top flange 38 but also by an annular wall 39 at an intermediate position along its length, so as to define an air inlet plenum between the top flange 38 and the annular wall 39, into which air can be fed through a pipe connected to an inlet port 40 (there are two such inlet ports 40, diametrically opposite each other). The inner wall of the steel chamber 37 is fixed to an annular baseplate 42 which supports the refractory lining 35, leaving an axial hole through which charcoal and char can emerge onto a grate 44. At one side of bottom part of the refractory lining 35 is a removable refractory plug 59, which provides a door for access to the top surface of the grate 44.

The outer wall of the steel chamber 37 is provided with access hatches 46 and 47 at the level of the grate 44. Below that level is a cylindrical portion 48, below which is defined a hopper portion 49. At the base of the hopper portion 49 is an outlet 50 for charcoal, closed by two successive flap valves 52. A gas outlet pipe 54 is mounted in the cylindrical portion 48, with an open end facing downward and surrounded by a flange 55.

The refractory lining 35, 35a is cast in situ within the inner wall of the steel chamber 37. It defines the cylindrical lower part 25b of the gasification chamber 25, and below that it defines a throat 56. The throat 56 comprises a tapered portion 56a tapering at an angle of 50° to the horizontal to a cylindrical portion 56b of smaller diameter, and a lower portion 56c increasing in diameter below the cylindrical portion 56b and extending down to the axial hole in the annular baseplate 42. Sixteen steel tubes 58 (only one is shown) of inner diameter 15 mm extend radially through the refractory lining 35, 35a from the outer surface of the inner wall of the steel chamber 37 to the cylindrical lower part 25b, being equally spaced around the inner face of the refractory lining 35, 35a at a position above the throat 56. In addition there are three larger steel pipes 60 (only one of which is shown) which extend radially from outside the steel chamber 37 to same region of the cylindrical lower part 25b.

In this example the gasification chamber 25 is of internal diameter 524 mm; the cylindrical portion 56b of the throat is of diameter 335 mm; and the lower portion 56c increases to a diameter of 515 mm at the bottom of the refractory lining 35. The cylindrical portion 56b is of axial length 85 mm. The steel tubes 58 communicate with the gasification chamber 25 at a position 160 mm above the start of the tapered portion 56a.

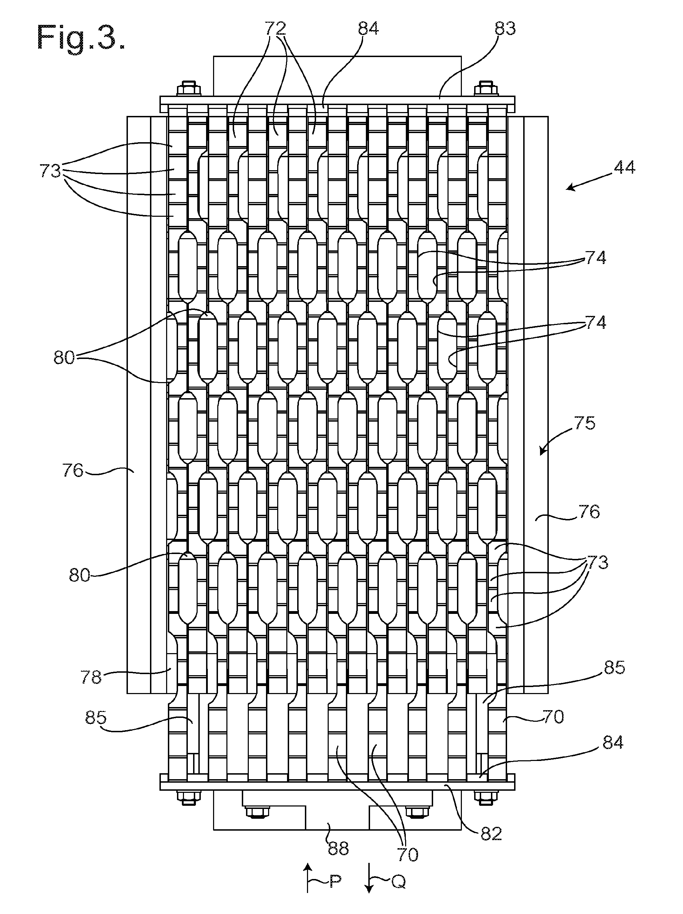

Referring now to figure 3 the grate 44 comprises two sets of grate bars and 70 and 72. The grate bars 70 are, in this example, 0.84 m long, of width 23 mm and of height 50 mm, and of cast iron. Along the upper surface are teeth 73, generally of a sawtooth shape, each of height 5 mm and total length 30 mm, and the steepest side of each tooth 73 being inclined at an angle of 115° to the longitudinal axis of the grate bar 70. There are six recesses 74 along the central section of the grate bar 70, three recesses 74 on one side alternating with three recesses 74 on the opposite side, and each recess being of overall length 100 mm, each recess 74 being of depth 11 mm at the top of the grate bar 70 and being of gradually increasing depth towards the bottom of the grate bar 70. Each grate bar 70 has a section at one end (the bottom end as shown) of length about 90 mm where there are no recesses, and has a section at the other end of length about 150 mm where there are no recesses. The grate bars 70 are sliding grate bars in the grate 44.

The other grate bars 72 are static grate bars, or are able to move lengthwise by only a few mm. They are identical to the sliding grate bars 70 except that the sections where there are no recesses are shorter: the section at one end is only 80 mm instead of 90 mm, and the section at the other end is only 40 mm instead of 150 mm.

The grate 44 also includes a rectangular frame 75 consisting of stainless steel side rails 76 linked at each end by support rails 78, and also linked at intermediate positions by five strengthening ribs 80, these components being welded together. The side rails 76 project 50 mm above the plane defined by the support rails 78. The overall length of this frame 75 is 720 mm. Resting on the frame 75 are nine slidable grate bars 70 spaced apart by 27 mm wide gaps, and within each gap is a static grate bar 72, such that there are 2 mm wide gaps between adjacent grate bars 70 and 72. The static grate bars 72 are held on the support rails 78 by lugs (not shown) locating in corresponding recesses in the support rails 78; this connection may allow the static grate bars 72 to move slightly.

The slidable grate bars 70 are connected together at their ends by a front end plate 82 and a rear end plate 83, both of stainless steel, the slidable grate bars 70 locating at the ends in recesses in the end plates 82 and 83. The recesses are defined by respective castellated bars 84 attached to the end plates 82 and 83. These recesses ensure that the slidable grate bars 70 are held at the correct spacing, but there is a gap (e.g. 3 mm) between each end of the slidable grate bar 70 and the face of the end plate 82 or 83. The end plates 82 and 83 are linked together by two stainless steel slide rods 85 that extend through guide apertures in the support rails 78 and extend through larger apertures through the strengthening ribs 80.

A boss 88 is mounted on the outer face of the front end plate 82. A pneumatic piston (not shown) may be connected to the boss 88 to move the front end plate 82 and consequently the slidable grate bars 70 axially. If the boss 88 and the front end plate 82 are moved in the direction of arrow P, then the front end plate 82 pushes on the slidable grate bars 70; if the boss 88 and the front end plate 82 are moved in the direction of arrow Q, the force is transmitted through the slide rods 85 to pull on the rear end plate 83, and the rear end plate 83 pushes on the slidable grate bars 70. This arrangement ensures that the slidable grate bars 70 are not put under tension.

With the grate 44 in the position shown in figure 3, the recesses 74 on the right-hand side of the slidable grate bars 70 (as shown) align with the recesses 74 on the left-hand side of the static grate bars 72. Similarly the recesses 74 on the left-hand side of the slidable grate bars 70 align with the recesses 74 on the right-hand side of the static grate bars 72. The maximum width of the gaps between adjacent grate bars 70 and 72 is therefore about 24 mm i.e. twice the depth of a recess 74 plus the spacing between the adjacent grate bars 70 and 72.

If the steel boss 88 and so the slidable grate bars 70 are moved forwards (in the direction of arrow P) through a distance of 100 mm, then the recesses 74 in all the bars 70 and 72 are aligned with each other, so that each recess 74 on a grate bar 70 or 72 faces a non-recessed portion of the adjacent grate bar 70 or 72. The maximum width of the gaps between adjacent grate bars 70 and 72 is therefore about 13 mm i.e. the depth of a recess 74 plus the spacing between the adjacent grate bars 70 and 72.

Hence by moving the slidable grate bars 70 alternately to and fro between these two extreme positions, the gaps in the grate 44 vary in width, which helps ensure that pieces of charcoal fall through the grate 44.

In use of the gasifier 7, to initiate operation charcoal or a mixture of charcoal and shredded waste wood is fed into the gasification chamber 25 to a desired depth, as observed through the access port 32, so forming a bed. Ignition can be initiated by blowing hot air through the steel pipes 60, for example using heater guns or burners. Once combustion has been initiated, and the bed is sufficiently hot, the flow of hot air is decreased to zero, and normal operation is started. Gasification occurs in a low oxygen environment with a downwards gas flow drawn by the fan 11, converting the wood to charcoal and gas, and air flows into the inlet air plenum through the pipe connected to the inlet port 40 (or through both inlet ports), and hence through the sixteen tubes 58 into the gasification chamber 25, so supplying the requisite air supply to maintain the gasification reactions. The wood and charcoal in the throat 56 become red hot, and indeed the temperature just above the throat 56 may be above 800°C, for example as much as 1200°C.

The gas outlet duct 62 from the inlet chamber 21 ends within the inlet pipe 40, having an opening 63 facing downstream in the air flow. By virtue of the fan 11 the pressure within the pipe connected to the inlet port 40 is slightly lower than atmospheric pressure, and this pressure difference draws air in through the small inlet 61, so that air and any noxious gases within the inlet chamber 21 are swept into the air flow that is fed via the tubes 58 into the gasification chamber 25.

In a rest position the grate 44 is arranged with the gaps at their least value. At intervals the movable grate bars 70 are moved into the position shown in figure 3, and are then returned to the rest position. The teeth 73 on the upper surface of the grate bars 70 and 72 ensure that the material that rests on the grate 44 is disturbed as the slidable grate bars 70 are moved; and the changing width of the gaps enables charcoal pieces of different sizes to fall through into the hopper region 49 below the grate 44. The gasifier can therefore operate substantially continuously. Even if the chopped pieces of wood contain pieces of metal, such as nails, these fall through the changing-width gaps and do not block the grate 44. In the two positions of the grate 44 the effective available area for gas flow is unchanged; the difference is only in the width of the gaps through which solid material can fall, so that changing the position of the grate bars 70 does not have a significant impact on the gas flow.

Thus in operation the space below the cylindrical portion 56b of the throat is filled with hot charcoal, typically at a temperature above 650°C, while the charcoal and wood mixture is at significantly higher temperatures above the throat 56 in the lower part 25b of the gasification chamber 25. Operation of the movable grate bars 70 to and fro, at intervals, as described above, ensures that charcoal and wood progress downwards through the gasifier 7 at a steady rate. It has been found that the 50° slope on the tapered portion 56a of the throat 56 significantly suppresses the risk of the shredded timber forming a bridge across the throat 56 and so preventing further movement of the charcoal and wood (as compared to a throat with a 45° slope). Hence both the grate 44 and the throat 56 suppress the risk of blockage, and so prevent tar formation. The multiplicity of air inlets through the tubes 58 provides a substantially even flow of air, which helps prevent tar formation.

At intervals the charcoal that has collected in the hopper portion 49 is removed by sequentially opening and closing the two flap valves 52: first opening the top valve 52 so the charcoal falls down onto the bottom valve 52, and then closing the top valve 52 and opening the bottom valve 52 to dispense the charcoal. The flap valves 52, when closed, provide substantially airtight seals at the base of the gasifier 7, and are effective at both normal and elevated temperatures despite the passage of tramp matter, ash, charcoal and clinker through them, and despite the negative pressure to which they are exposed.

It will be appreciated that the gasifier 7 described above, and the plant 100, are by way of example only. In one modification a much higher proportion of the gasification chamber 25 is defined by the refractory lining 35. For example the refractory lining 35 might extend the entire height of the gasification chamber 25. Alternatively, particularly if the inspection hatch 30 is provided at a position higher up the gasification chamber than that shown in figure 2, the upper part 25a might terminate (with the flange 28) below the inspection hatch 30, and the lower part 25b and so the refractory lining 35 extend further up and so further above the throat 56.

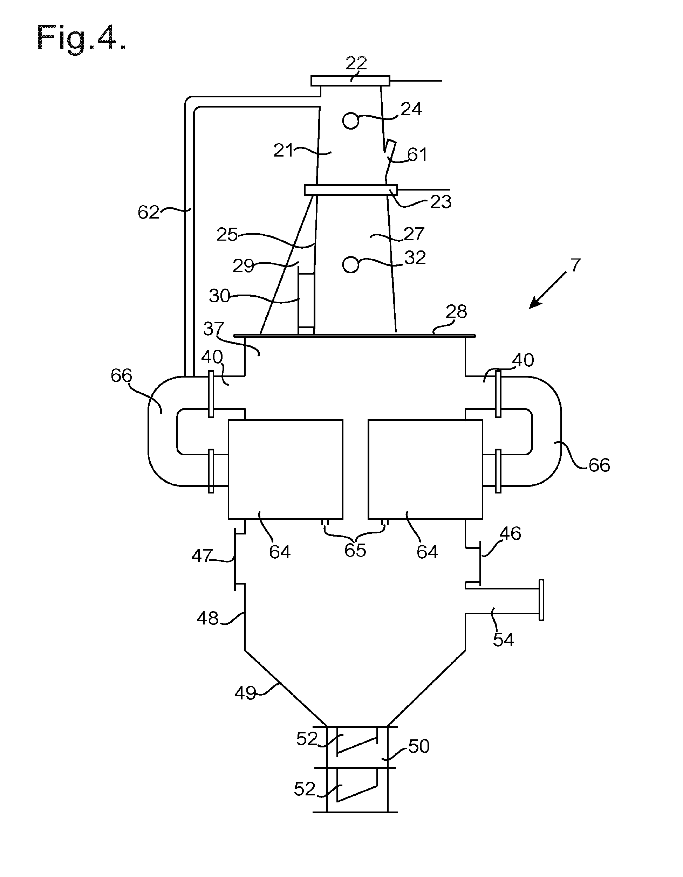

Referring now to figure 4, this shows a modification to the gasifier 7 of figure 2; in this case the gasifier is shown in side elevation with no parts in section. A portion of the outer wall of the steel chamber 37 is enclosed within two heat transfer jackets 64, each of which is just less than a semicircle in plan view, the heat transfer jackets 64 being just below the air inlet pipes 40, so they encompass the portion of the chamber 37 in which is the throat 56 of the gasifier 7. Each heat transfer jacket 64 has an inlet port 65 for air near each end (only one can be seen in figure 4, and is indicated schematically). Each heat transfer jacket 64 is connected by a short pipe 66 to one or other of the inlet ports 40. Hence, in use, due to the pressure drop produced by the fan 11, air enters each heat transfer jacket 64 through the inlet ports 65, and flows circumferentially around the heat transfer jacket 64, through the pipe 66 and the inlet port 40, and so (as explained in relation to figure 2) through the tubes 58 into the gasification chamber 25. This arrangement ensures that the air is preheated before it reaches the gasification chamber 25, which allows for greater efficiency of the gasifier 7 and improves its ability to treat damp material, significantly reducing tar formation. It also enhances safety for operators of the gasifier 7, as it ensures ventilation in the immediate vicinity of the gasifier 7; it reduces the temperature of at least some of the exposed surfaces of the gasifier 7; and it provides blowback protection in the unlikely event of a deflagration within the gasifier 7.

## Claims

1. A gasifier comprising means to define a generally upright cylindrical chamber at least a lower part of which is defined by a body of refractory material; an inlet chamber communicating with the top of the cylindrical chamber, the inlet chamber being provided with two spaced-apart valve means which may be closed to inhibit ingress of air and may be opened successively to allow input of biomass; the refractory body defining a throat communicating with the bottom of the cylindrical chamber, the throat comprising a tapered portion tapering at an angle of at least 50° to the horizontal to a cylindrical portion of diameter less than that of the cylindrical chamber, and a lower portion increasing in diameter below the cylindrical portion; the refractory body also defining a multiplicity of air inlet ducts communicating with the cylindrical chamber above the throat; a grate below the refractory body, the grate comprising movable elements; and an outlet duct for extraction of gas from the gasifier below the refractory body.

2. A gasifier as claimed in claim 1 also comprising a hopper at the bottom of the gasifier, the hopper being provided with an outlet chamber defined between two successive gas-tight flap valves.

3. A gasifier as claimed in claim 1 or claim 2 wherein the air inlet ducts communicate with the cylindrical chamber at locations around its circumference at separations of less than 130 mm, preferably less than 110 mm.

4. A gasifier as claimed in any one of the preceding claims wherein at least some of the air supplied to the air inlet ducts is first arranged to flow through the inlet chamber of the gasifier.

5. A gasifier as claimed in any one of the preceding claims wherein at least some of the air supplied to the air inlet ducts is first arranged to flow through a heat exchanger.

6. A gasifier as claimed in any one of the preceding claims wherein the narrowest portion of the throat is of diameter between 60 and 65% that of the cylindrical chamber, for example between 61 and 64%.

7. A gasifier as claimed in any one of the preceding claims wherein the grate comprises a multiplicity of grate bars arranged side-by-side in substantially a common plane, alternate grate bars being movable lengthwise so as to move relative to adjacent grate bars, wherein each grate bar defines a multiplicity of recesses along both sides of the bar, recesses on one side of the bar being arranged alternately with recesses on the opposite side of the bar along the length of the bar.

8. A gasifier as claimed in claim 7 wherein alternate grate bars are connected to a linking mechanism whereby the alternate grate bars can be moved lengthwise together.

9. A gasifier as claimed in claim 7 or claim 8 wherein the the upper surfaces of all the grate bars are provided with upwardly-projecting teeth, for example with an asymmetrical sawtooth shape.

10. A gasifier as claimed in any one of the preceding claims wherein the gas outlet duct from the gasifier comprises an outlet pipe with an open end facing downwardly, below the grate and surrounded by a baffle or flange.

11. A gasification plant comprising a gasifier as claimed in any one of the preceding claims, means to feed biomass into the inlet chamber, means to cause flow of gas downwardly through the throat of the gasifier and out of the gas outlet duct, and gas purification means for removing particulate material and tar from the out flowing gas stream.
